# EUROPÄISCHE PATENTSCHRIFT

(11) **EP 0 386 287 B1**
(45) Veröffentlichungstag und Bekanntmachung des Hinweises auf die Patenterteilung: **21.07.1993**
(21) Anmeldenummer: 89104018.0
(22) Anmeldetag: 07.03.1989
(51) Int. Cl.: H02K 23/42, H02K 1/10

(54) **Gleichstrommaschine mit Haupt- und Wendepolen**
D.C. machine with main and commutating poles
Machine à courant continu ayant des pôles principaux et des pôles de commutation

(43) Veröffentlichungstag der Anmeldung: 12.09.1990
(73) Patentinhaber: SIEMENS AKTIENGESELLSCHAFT, 80333 München (DE)
(72) Erfinder: Dorr, Gerhard, Dipl.-Ing.(FH), D-8501 Allersberg (DE)

(56) Entgegenhaltungen:
- CH-A- 420 353
- DE-A- 3 008 937
- US-A- 2 169 100
- US-A- 2 482 526

## Beschreibung

Die Erfindung betrifft eine Gleichstrommaschine gemäß dem Oberbegriff des Anspruches 1.

Eine solche Gleichstrommaschine ist durch die DE-A-16 13 317 bekannt. Zur Abstützung der auf den jeweiligen Wendepolkern aufgesteckten Spule ist bei dieser Maschine zwischen dem Wendepolkern und dem jeweils benachbarten Hauptpolkern ein einerseits auf dem Polhorn des Hauptpolkerns aufliegender und andererseits in eine entsprechende am Wendepolkern ausgebildete Nut eingreifender Nutkeil vorgesehen. Das Ende des Wendepolkernes ragt damit über die aufgesteckte Spule hinaus. Da die Wendepolkerne einstückig an das Joch der Maschine angestanzt sind, ist ein fester Wendepolluftspalt vorgegeben. Dies führt zu Kommutierungsschwierigkeiten, wenn bei gleicher Ständerjochausführung, wie sie aus Kostengründen erwünscht ist, der Läufer jeweils entsprechend dem Verwendungszweck der Maschine unterschiedlich ausgeführt werden muß.

Ferner sind durch die CH-A-420 353 und die US-A-2 169 100 elektrische Maschinen bekannt, bei denen die Kommutierung durch eine Veränderung des magnetischen Widerstandes der Wendepole optimiert wird.

Weiterhin ist in der DE-A-30 08 937 ein Kollektormotor zum Antrieb von Hausgeräten beschrieben. Durch Verschlußstücke zwischen den Polen werden bei diesem Motor, der im übrigen keine Wendepole aufweist, die Luftgeräusche vermindert.

Der Erfindung liegt die Aufgabe zugrunde, eine Gleichstrommaschine gemäß dem Oberbegriff des Anspruchs 1 so auszubilden, daß auch bei einstückig angestanzten Wendepolkernen unterschiedliche Läuferausführungen möglich sind, ohne daß es zu Kommutierungsschwierigkeiten kommt.

Die Lösung der gestellten Aufgabe gelingt durch die im Kennzeichen des Anspruchs 1 angegebenen Merkmale. Infolge der sich unter dem Wendepolkern hindurch erstreckenden Halteplatte und einer entsprechend kurzen Ausbildung des Wendepolkernes wird zwischen dem Ende des Wendepolkernes und der Halteplatte ein Zwischenraum geschaffen, der durch entsprechendes Auffüllen mit Blechen aus ferromagnetischem Material eine Einstellung eines für die Kommutierung optimalen Luftspaltes ermöglicht. Ein noch verbleibender Restzwischenraum wird zur Halterung der eingesetzten ferromagnetischen Bleche mit amagnetischem Material ausgefüllt, wobei hierfür vorteilhafterweise Bleche aus amagnetischem Material verwendet werden.

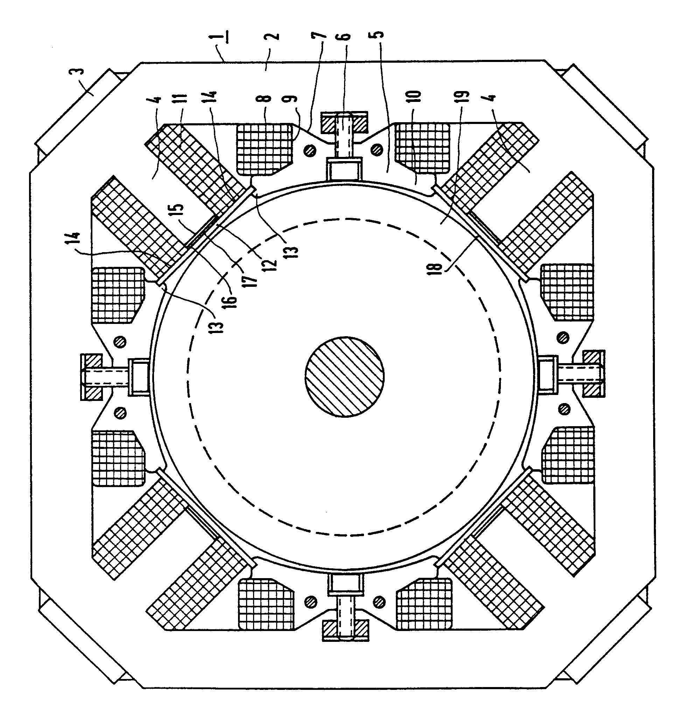

Anhand einer in der Zeichnung im Querschnitt dargestellten Gleichstrommaschine wird die Erfindung nachfolgend näher beschrieben.

Mit 1 ist ein aus einer Vielzahl von zusammengefügten Blechlamellen 2 bestehendes Ständerjoch einer Gleichstrommaschine bezeichnet. Die Blechlamellen 2 werden durch am Außenumfang angeschweißte Halteschienen 3 als Paket zusammengehalten. An den Blechlamellen 2 sind Wendepolkerne 4 einstückig angestanzt. Die Hauptpole 5 der Gleichstrommaschine sind als gesonderte Teile ausgeführt, die mittels Schrauben 6 mit entsprechenden, an den Blechlamellen 2 angestanzten Ansätzen 7 verbunden sind. Damit können vor dem Einbau der Hauptpole 5 in das Ständerjoch 1 vorgefertigte Hauptpolspulen 8 auf den Schaft 9 der Hauptpole 5 aufgesteckt werden, die dann im eingebauten Zustand der Hauptpole 5 zwischen den Polhörnern 10 der Hauptpole 5 und dem Ständerjoch 1 gehalten sind.

Die Wendepolkerne 4 sind ohne Polhörner ausgeführt, so daß die die Wendepolwicklung bildenden Spulen 11 vom Innenraum des Ständerjoches 1 her auf die Wendepolkerne 4 aufgeschoben werden können. Die Halterung der Spulen 11 auf den Wendepolkernen 4 erfolgt jeweils mittels einer Halteplatte 12, die sich unter dem betreffenden Wendepolkern 4 und der Spule 11 hindurch erstreckt und auf Vorsprüngen 13 der Polhörner 10 der zu dem betreffenden Wendepolkern 4 benachbarten Hauptpole 5 aufruht. Die Spulen 11 sind dadurch zwischen den Halteplatten 12 und dem Ständerjoch 1 festgelegt.

Wie aus der Darstellung in der Zeichnung erkennbar, sind die Wendepolkerne 4 gegenüber der auf der Halteplatte 12 aufliegenden Stirnseite 14 der Spule 11 kürzer ausgebildet, so daß zwischen der Halteplatte 12 und dem Ende 15 des jeweiligen Wendepolkernes 4 ein Zwischenraum 16 gebildet ist. In diesen Zwischenraum 16 sind Bleche 17 eingesetzt. Je nachdem, wie groß der Luftspalt 18 zwischen dem Läufer 19 und dem betreffenden Wendepolkern 4 der Gleichstrommaschine entsprechend der elektrischen Auslegung der Maschine zur Erreichung einer einwandfreien Kommutierung bemessen werden muß, wird eine entsprechende Anzahl von aus magnetischem Werkstoff bestehenden Blechen 17 (magnetische Bleche) in den Zwischenraum 16 eingefügt. Ist der Zwischenraum 16 damit noch nicht vollständig ausgefüllt, können weitere aus einem amagnetischem Werkstoff bestehende Bleche (amagnetische Bleche) eingefügt werden, bis der Zwischenraum 16 vollständig ausgefüllt ist und die Bleche 17 darin festsitzen. Es besteht auch die Möglichkeit, anstelle der amagnetischen Bleche anderes amagnetisches Material, z.B. Isolierstoff oder Kunststoff zum Ausfüllen des Restzwischenraumes zu verwenden und dadurch die eingefügten magnetischen Bleche zu sichern.

Durch die Abstützung der Halteplatte 12 an den Polhörnern 10 der zu dem betreffenden Wendepolkern 4 benachbarten Hauptpole 5 ergibt sich für die Spulen 11 gegenüber einer nach dem Stand der Technik ausgeführten Gleichstrommaschine eine größere nutzbare Länge, die unabhängig von der jeweils notwendigen Größe des Luftspaltes 18 konstant ist. Damit liegt eine bessere Raumausnutzung vor und es ergibt sich eine Erhöhung der Maschinenleistung bei gleichen äußeren Abmessungen.

Die Verwendung einer Halteplatte 12 aus einem elektrisch nichtleitenden und amagnetischen Material, hat den Vorteil, daß der Luftspalt unter dem Wendepolkern 4 nicht beeinfluß wird. Außerdem tritt keine Erwärmung infolge Ummagnetisierungsverluste durch das Wendepolfeld ein und der Wendepolfluß wird damit auch nicht bedämpft.

## Patentansprüche

1. Gleichstrommaschine mit Haupt- und Wendepolen, bei der am geblechten Ständerjoch (1) zumindest die Wendepolkerne (4) einstückig angestanzt sind und die Wendepolwicklung aus auf die Wendepolkerne (4) aufsteckbaren Spulen (11) besteht, die jeweils durch eine an den zu dem betreffenden Wendepolkern (4) benachbarten Hauptpolen (5) abgestützte Haltevorrichtung (12) auf dem Wendepolkern (4) lagegesichert sind,
**dadurch gekennzeichnet**,
daß die Haltevorrichtung aus einer an den entsprechenden Hauptpolen (5) abgestützten, sich unter den Wendepolkern (4) und der Spule (11) hindurch erstreckenden elektrisch nichtleitenden, amagnetischen Halteplatte (12) besteht, wobei der Wendepolkern (4) gegenüber der auf der Halteplatte (12) aufliegenden Stirnseite (15) seiner aufgesteckten Spule (11) kürzer ausgebildet ist und in den somit zwischen dem Ende (15) des Wendepolkernes (4) und der Halteplatte (12) bestehenden Zwischenraum (16) magnetische Bleche in einem der erforderlichen Größe des zwischen dem Wendepolkern (4) und dem Läufer (19) der Maschine bestehenden Luftspaltes (18) entsprechenden Maß eingesetzt sind, wobei ein verbleibender Restzwischenraum mit amagnetischem Material ausgefüllt ist.

2. Gleichstrommaschine nach Anspruch 1,
**dadurch gekennzeichnet**,
daß der Restzwischenraum mit amagnetischen Blechen ausgefüllt ist.

3. Gleichstrommaschine nach Anspruch 1 oder 2,
**dadurch gekennzeichnet**,
daß als Halteplatte (12) ein glasfaserverstärktes Kunststoffteil hoher Festigkeit vorgesehen ist.

## Claims

1. D.c. machine having main and auxiliary poles, in which machine at least the auxiliary pole cores (4) are pressed in one piece with the laminated stator yoke (1), and the auxiliary pole winding consists of coils (11) which can be plugged on to the auxiliary pole cores (4) and which are secured in position on the respective auxiliary pole core (4) by means of a retaining device (12) supported against the main poles (5) adjacent to the respective auxiliary pole core (4), characterised in that the retaining device consists of an electrically non-conductive, non-magnetic retaining plate (12) supported against the corresponding main poles (5) and extending beneath the auxiliary pole core (4) and the coil (11), the auxiliary pole core (4) being formed shorter than the front end (15) of its plug-on coil (11), which is supported on the retaining plate (12), and, into the space (16) thus comprised between the end (15) of the auxiliary pole core (4) and the retaining plate (12), there are inserted magnetic sheets in a quantity corresponding to the size required for the air gap (18) comprised between the auxiliary pole core (4) and the rotor (19) of the machine, with a remaining space being filled with non-magnetic material.

2. D.c. machine according to claim 1, characterised in that the remaining space is filled with non-magnetic sheets.

3. D.c. machine according to claim 1 or 2, characterised in that, as the retaining plate (12), there is provided a high-resistance glass fibre-reinforced plastics part.

## Revendications

1. Machine à courant continu comportant des pôles principaux et des pôles de commutation, dans laquelle au moins les noyaux (4) des pôles de commutation sont découpés d'un seul tenant dans la culasse feuilletée (1) du stator, et l'enroulement des pôles de commutation est constitué par des bobines (11), qui peuvent être emmanchées sur les noyaux (4) des pôles de commutation et dont chacune est bloquée en position sur le noyau (4) du pôle de commutation au moyen d'un dispositif de retenue (12) qui prend appui sur les pôles principaux (5) qui sont voisins du noyau (4) du pôle de commutation considéré,
caractérisée par le fait
que le dispositif de retenue est constitué par une plaque de retenue non électriquement conductrice et amagnétique (12), qui prend appui sur les pôles principaux correspondants (5) et s'étend au-dessous du noyau (4) des pôles de commutation et de la bobine (11), le noyau (4) du pôle de commutation se terminant en-deçà de la face frontale (15), qui prend appui sur la plaque de retenue (12), de la bobine emmanchée (11) de ce pôle, tandis que dans l'espace intercalaire (16) qui existe par conséquent entre l'extrémité (15) du noyau (4) du pôle de commutation et la plaque de retenue (12), des tôles magnétiques sont insérées, à un degré correspondant à la taille requise de l'entrefer (18) existant, entre le noyau (4) du pôle de commutation et le rotor (19) de la machine, un espace intercalaire résiduel subsistant étant rempli par un matériau amagnétique.

2. Machine à courant continu suivant la revendication 1, caractérisée par le fait que l'espace intercalaire résiduel est rempli par des tôles amagnétiques.

3. Machine à courant continu suivant la revendication 1 ou 2, caractérisée par le fait qu'il est prévu, comme plaque de retenue (12), une pièce en matière plastique renforcée par des fibres de verre et possédant une grande résistance mécanique.
